# EUROPEAN PATENT APPLICATION

(11) **EP 2 282 100 A1**
(43) Date of publication of application: **09.02.2011**
(21) Application number: 10170390.8
(22) Date of filing: 22.07.2010
(51) Int. Cl.: F16L 37/08, F16L 37/12

(54) **Connection-state check tool used for assembling a pipe coupling**

(30) Priority: 06.08.2009 JP 2009183413
(71) Applicant: Nitta Corporation, Osaka-shi, Osaka 556-0022 (JP)
(72) Inventor: Sawada, Kazunori, Mie Mie 518-0494 (JP)
(74) Representative: Schaumburg, Karl-Heinz

(57) **Abstract**

A connection-state check tool (30) is used for assembling a pipe coupling having a connection pipe and a coupling member (12). The connection-state check tool (30) comprises a pair of arms (31,32) and a frame-shaped handle (33). The pair of arms has claws (34) that can clamp down on the coupling member (12), and are engageable with the connecting pipe. The frame-shaped handle (33) is connected to the arms (31,32). The handle (33) has a split (36) at a position opposite to the arms (31,32). The handle (33) has elasticity, due to which the split (36) can expand.

## Description

### BACKGROUND OF THE INVENTION

### 1. Field of the Invention

The present invention relates to a connection-state check tool, which is used for checking whether or not a proper connection-state exists for a pipe coupling that connects together two pipes that are automobile parts.

### 2. Description of the Related Art

Conventionally, there is known a connection-state check tool as indicated in Japanese Unexamined Patent Publication No. H11-230456. The connection-state check tool is provided for checking a connection-state of a male-connector and a female-connector, and is attached to the female-connector prior to the connecting operation. When the male-connector is properly connected to the female-connector, a pair of claws of the connection-state check tool is pressed and expanded by a flange of the male-connector, so that the connection-state check tool is released from the female-connector. In this state, when the connection-state check tool is pulled, it is removed from the pipe coupling. Conversely, if the connection-state of the male-connector and the female-connector is incomplete, the pair of claws is engaged with the female-connector, and thus, when the connection-state check tool is pulled, a weak portion such as a notch formed in the connection-state check tool is broken. Due to this, the operator can recognize that the connection-state of the male-connector and the female-connector is improper.

The conventional connection-state check tool described above breaks apart, when the connection-stateofthe male-connector and the female-connector is improper. Accordingly, it is necessary to remove the fragments of the connection-state check tool remaining in the pipe coupling, and then attach a new connection-state check tool before the connecting operation can be carried out again. That is, the connection-state check tool cannot be used if the connection-state is incomplete, thus it should be abolished.

### SUMMARY OF THE INVENTION

Therefore, an object of the present invention is to provide a connection-state check tool that does not destruct when the connection-state of the pipe coupling is incomplete, and therefore can be used many times.

According to the present invention, there is provided a connection-state check tool used for assembling a pipe coupling having a connection pipe and a coupling member, the connection-state check tool comprising a pair of arms and a frame-shaped handle. The pair of arms has claws that can clamp down on the coupling member and are engageable with the connecting pipe. The frame-shaped handle is connected to the arms. The handle has a split at a position opposite to the arms, and has elasticity, due to which the split can expand.

### BRIEF DESCRIPTION OF THE DRAWINGS

The objects and advantages of the present invention will be better understood from the following description, with reference to the accompanying drawings in which:
Fig. 1 is a side view of a pipe coupling in a disassembled state, in which the connection-state is checked using a connection-state check tool of an embodiment of the present invention;
Fig. 2 is a perspective view showing a coupling member in an inverted state;
Fig. 3 is a perspective view showing the connection-state check tool;
Fig. 4 is a perspective view showing a state in which the connection-state check tool is attached to the coupling member; and
Fig. 5 is a side view showing the coupling member covered with a cover.

### DESCRIPTION OF THE PREFERRED EMBODIMENTS

The present invention is described below with reference to the embodiment shown in the drawings.

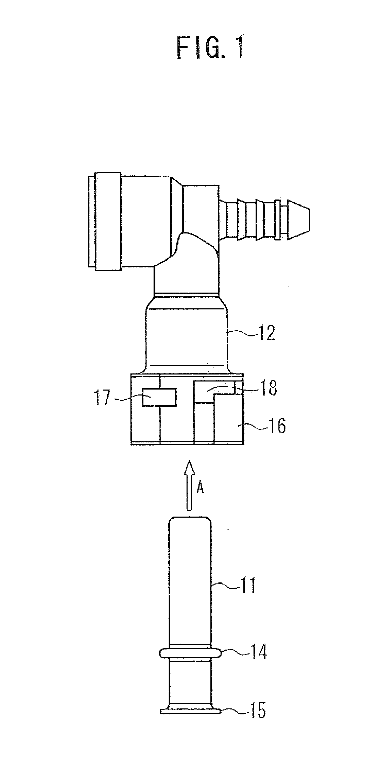

Fig. 1 shows a pipe coupling in which the connection-state is checked by a connection-state check tool. That is, the connection-state check tool is used for assembling the pipe coupling. The pipe coupling is mounted in an automobile to form a part for the passage of liquid.

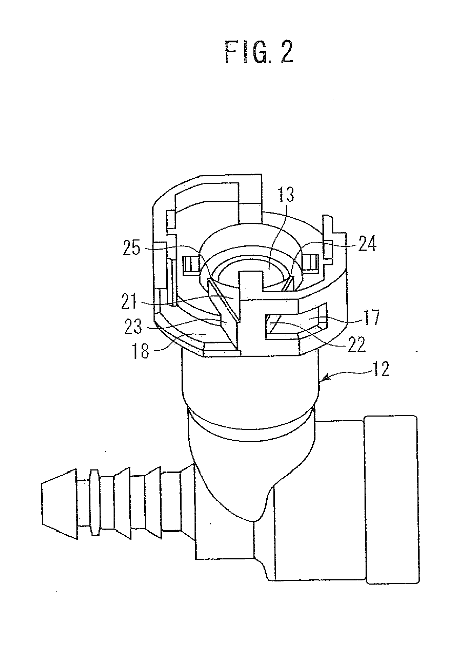

A cylindrical connection pipe 11 is inserted in a connecting bore 13 (see Fig. 2) of a coupling member 12 in the direction shown by the arrow A, to form a predetermined passage. The connection pipe 11 is provided with an annular bead 14 at a portion lower than the central portion in the axial direction, and a flange 15 is formed at the lower end portion in order to engage with the lower end of the coupling member 12. The bead 14 is a projection extending along a circular direction of the outer surface of the connection pipe 11.

A retainer 16 is fit on the lower end portion of the coupling member 12. The retainer 16 is formed with a pair of holes 17 and 18 through which the connecting bore 13 can be accessed from the outside of the coupling member 12. Namely, the connecting bore 13 communicates with the outside through the holes 17 and 18.

Fig. 2 is a perspective view showing the coupling member 12 in an inverted state, in which the retainer 16 is removed from the coupling member 12. In the coupling member 12, a protruding portion 21, which has a triangular outline when viewed from above in Fig 2, is formed on a rear side of the holes 17 and 18. Two side walls 22 and 23 of the protruding portion 21 extend from the holes 17 and 18 toward the inner wall of the connecting bore 13. In more detail, the side wall 22 extends from an edge portion of the hole 17 close to the hole 18 toward the inner wall of the connecting bore 13, and the side wall 23 extends from an edge portion of the hole 18 close to the hole 17 toward the inner wall of the connecting bore 13.

The tip portions of the side walls 22 and 23 closest to the connecting bore 13 are engaging portions 24 and 25, which appear at sharp acute angles when viewed from above in Fig. 2. Namely, the engaging portions 24 and 25 are located at positions that are near the connecting bore 13 and correspond to the pair of holes 17 and 18. In the protruding portion 21, a front portion between the engaging portions 24 and 25 is a curved wall along the inner wall of the connecting bore 13.

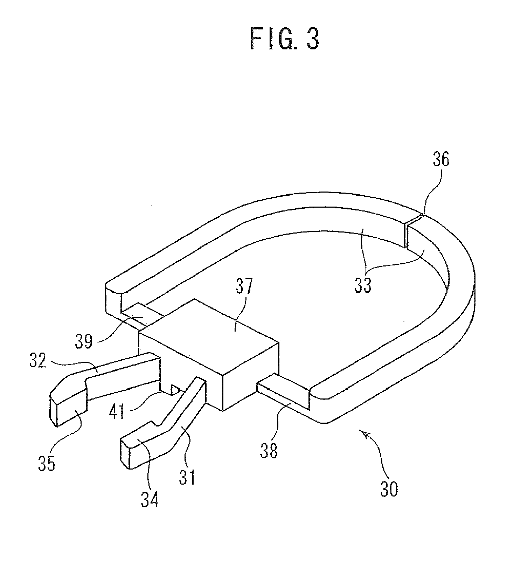

Fig. 3 is a perspective view showing the connection-state check tool 30, which is formed in one body using plastic material, for example. The connection-state check tool 30 has a pair of caliper-shaped arms 31 and 32 having elasticity, and a frame-shaped handle 33 connected to the arms 31 and 32. The pair of arms 31 and 32 are inserted through the holes 17 and 18, and claws 34 and 35 formed at the tip portions thereof can be engaged with the engaging portions 24 and 25. The handle 33 has a split 36 at a position opposite to the arms 31 and 32. The handle 33 has elasticity, due to which the split 36 can expand. Although the split 36 has a shape obtained by cutting the handle 33 on a plane perpendicular to the longitudinal axis of the handle 33 in the embodiment, the split 36 can have various kinds of shapes according to the necessity. Namely, in the split 36, the end walls facing each other can be convex, respectively, or one of the walls can be concave while the other is convex.

The handle 33 has a support portion 37 on the side opposite to the split 36, and the arms 31 and 32 project outward from the support portion 37. The support portion 37 is a rectangular parallelepiped, and is thicker than the other parts of the handle 33. The handle 33 has flexible arms 38 and 39, which are thin plates on both sides of the support portion 37. The flexible arms 38 and 39 have greater flexibility than the other parts of the handle 33. Thus, when portions near the split 36 are pulled upon by a finger, for example, in the direction opposite to the support portion 37, the flexible arms 38 and 39 deform in accordance with the pulling force. When the pulling force becomes large to some extent, the split 36 is enlarged or expanded so that the finger passes through the split 36 and is disengaged from the handle 33. When this occurs, the handle 33 is restored to its original shape.

The support portion 37 has a stopper 41 that has a thin rectangular plate and is projected from the support portion 37. The stopper 41 is provided on an under surface of the support portion 37 close to the arm 38.

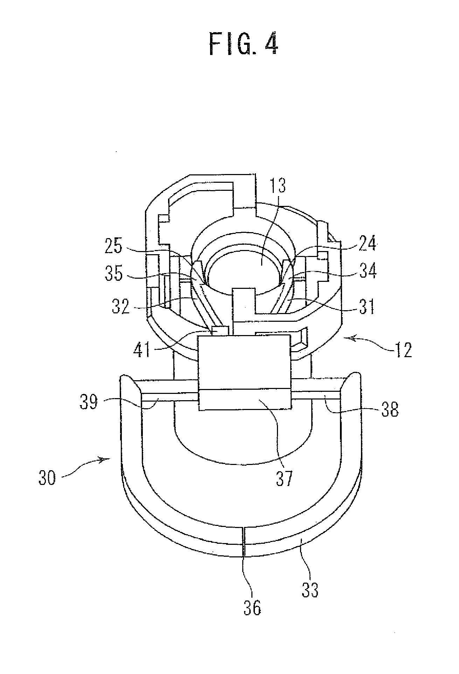

Fig. 4 is a perspective view showing a state in which the connection-state check tool 30 is attached to the coupling member 12, and the coupling member 12 is shown in an inverted state with the retainer 16 removed, in a similar way as Fig. 2. As shown in Fig. 4, the arms 31 and 32 of the connection-state check tool 30 are inserted in the coupling member 12 through the holes 17 and 18 (see Fig. 2), so that the claws 34 and 35 are engaged with the engaging portions 24 and 25 and are projected into the connecting bore 13.

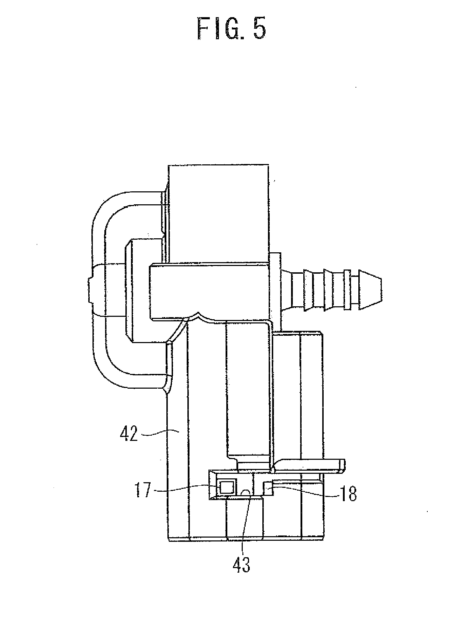

The coupling member 12 is covered with a cover 42, as shown in Fig. 5. The cover 42 has an opening 43 at a position corresponding to the pair of holes 17 and 18 of the coupling member 12. The opening 43 has approximately the same shape as the support portion 37 of the connection-state check tool 30, so that the support portion 37 can be inserted in the opening 43. In a state in which the arms 31 and 32 of the connection-state check tool 30 are inserted in the holes 17 and 18, the support portion 37 is also inserted in the opening 43, and the stopper 41 is inserted between the cover 42 and the coupling member 12.

An operation of the connection-state check tool 30 is described below.

Prior to connecting the connection pipe 11 to the coupling member 12, the connection-state check tool 30 is attached to the coupling member 12. Namely, the support portion 37 is positioned in the opening 43, and the arms 31 and 32 are inserted in the holes 17 and 18. Due to this, the claws 34 and 35 are engaged with the engaging portions 24 and 25, and project into the connecting bore 13 (see Fig. 4).

Then, the connection pipe 11 is inserted into the connecting bore 13 of the coupling bore 12. In a state in which the connection pipe 11 is inserted and positioned properly at a predetermined position in the connecting bore 13, the claws 34 and 35 are pressed outward by the bead 14 of the connection pipe 11, and are forced retreated outside of the connecting bore 13 to engage with the side walls 22 and 23 of the protruding portion 21. Since the arms 31 and 32 have elasticity, the arms 31 and 32 act to narrow the angle from the expanded state, so that the arms 31 and 32 tend to slidably move along the side walls 22 and 23 to the holes 17 and 18. However, since the stopper 41 is inserted between the cover 42 and the coupling member 12, the connection-state check tool 30 will not independently separate or come free from the coupling member 12.

In this state, when pulling on the handle 33 of the connection-state check tool 30 with a finger, the stopper 41 separates from the cover 42, so that the connection-state check tool 30 is removed from the coupling member 12.

Conversely, in a state in which the connection pipe 11 is inserted and not positioned at the predetermined position, namely in a state in which the connection-state of the connecting pipe 11 is incomplete and the bead 14 does not reach the claws 34 and 35 of the connection-state check tool 30, the claws 34 and 35 remain in place clamped down on the engaging portions 24 and 25. Accordingly, in this state, when the handle 33 of the connection-state check tool 30 is pulled, the pulling force deforms the handle 33 and expands the split 36, so that the finger passes through the split 36 and frees itself to the outside of the handle 33. Namely, the pulling force is prevented from being transmitted to the arms 34 and 35, and the connection-state check tool 30 remains connected to the coupling member 12.

Thus, when the connection-state of the connection pipe 11 to the coupling member 12 is incomplete, the connecting operation of the connection pipe 11 is repeated until the connection-state check tool 30 can be smoothly removed from the coupling member 12. Namely, even if the connection-state is incomplete, the connection-state check tool 30 will not destruct, and thus, the connection-state check tool 30 can be used semipermanently.

## Claims

1. A connection-state check tool used for assembling a pipe coupling having a connection pipe and a coupling member, said connection pipe being provided with a projection extending along a circular direction of the outer surface of said connection pipe, said coupling member being provided with a connecting bore in which said connection pipe is inserted, said coupling member being provided with a pair of holes through which said connecting bore can be accessed from the outside of said coupling member, said coupling member being provided with engaging portions located near said connecting bore and corresponding to said pair of holes, said connection-state check tool comprising:
a pair of arms with claws being inserted into said pair of holes so that said claws can be engaged with said engaging portions; and
a frame-shaped handle connected to said arms, said handle having a split at a position opposite to said arms, said handle having elasticity, due to which said split can expand;
in a state in which said connection pipe is inserted and positioned at a predetermined position in said connecting bore, said claws are pressed outward by said projection, so that said connection-state check tool is removed from said coupling member when said handle is pulled;
in a state in which said connection pipe is inserted and not positioned at said predetermined position, said claws remain in place to clamp down on said engaging portion, so that, when said handle is pulled, the pulling force expands said split, which prevents the pulling force from being transmitted to said arms, and said connection-state check tool remains connected to said coupling member.

2. A connection-state check tool according to claim 1, wherein said split has a shape obtained by cutting said handle on a plane perpendicular to the longitudinal axis of said handle.

3. A connection-state check tool according to claim 1, wherein said handle has a support portion on the side opposite to said split, said support portion being thicker than the other parts of said handle, said arms projecting from said support portion.

4. A connection-state check tool according to claim 3, wherein said handle has flexible arms on both sides of said support portion, said flexible arms having greater flexibility than the other parts of said handle.

5. A connection-state check tool according to claim 3, wherein said coupling member is covered with a cover having an opening at a position corresponding to said pair of holes, said support portion can be inserted in said opening.

6. A connection-state check tool according to claim 5, wherein said support portion has a stopper that is projected from said support portion and can be inserted between said cover and said coupling member.

7. A connection-state check tool used for assembling a pipe coupling having a connection pipe and a coupling member, comprising:
a pair of arms that have claws that can clamp down on said coupling member and are engageable with said connecting pipe; and
a frame-shaped handle connected to said arms, said handle having a split at a position opposite to said arms, said handle having elasticity, due to which said split can expand.
